**Europäisches Patentamt**

**European Patent Office**

**Office européen des brevets**

(19)

(11) Numéro de publication: **0 274 924 B1**

(12) **FASCICULE DE BREVET EUROPEEN**

(45) Date de publication du fascicule du brevet: 06.06.90

(51) Int. Cl.⁵: **B07B 13/11**

(21) Numéro de dépôt: **87402686.7**

(22) Date de dépôt: **27.11.87**

(54) Procédé destiné à réaliser la séparation de matériaux extrudés présentant ou non des imperfections.

(30) Priorité: **09.12.86 FR 8617317**

(43) Date de publication de la demande:
**20.07.88 Bulletin 88/29**

(45) Mention de la délivrance du brevet:
**06.06.90 Bulletin 90/23**

(84) Etats contractants désignés:
**AT BE DE GB IT LU NL**

(56) Documents cités:
**EP-A- 223 639**
**FR-A- 1 170 645**
**FR-A- 2 320 620**
**GB-A- 2 108 871**
**US-A- 2 936 072**

**SOVIET INVENTIONS ILLUSTRATED, section P,
semaine K36, 19 octobre 1983, résumé
no. 83-756967/36, Derwent Publications, Ltd, Londres,
GB; & SU-A-969 338 (CONS MATER
HYDROMEC) 30-10-1982**

(73) Titulaire: **EUROPEENNE DE RETRAITEMENT DE
CATALYSEURS (en abrégé EURECAT), Quai Jean
Jaurès - Boite Postale 45, F-07800 LA VOULTE SUR
RHONE(FR)**

(72) Inventeur: **Ackermann, François, 15, quai du Pont
Beauchaftel, F-07800 La Voulte sur Rhone(FR)**
Inventeur: **Berrebi, Georges, 17, rue Barnave,
F-26500 Bourg les Valence(FR)**

(74) Mandataire: **Andreeff, François et al, INSTITUT
FRANCAIS DU PETROLE 4, avenue de Bois-Préau,
F-92502 Rueil-Malmaison(FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un appareil séparateur vibrant hélicoïdal et son utilisation pour effectuer une séparation efficace entre des particules en forme d'extrudés, par exemple pour séparer des extrudés selon leur taille, leur poids ou leur densité apparente.

Dans ce texte, le mot extrudé est utilisé pour désigner des matériaux ayant la forme de bâtonnets de surface extérieure cylindrique ou non. Le mot extrudé est utilisé par opposition à sphère mais il n'exclut pas les matériaux obtenus par coulage ou moulage à condition que ceux ci aient des formes approchantes de celles du bâtonnet à surface externe plus ou moins régulière comme par exemple les trilobes, tétralobes, tortillons, tresses, etc...

Cette invention, couplée éventuellement à la séparation par criblage, permet notamment de restituer aux raffineurs ou aux pétrochimistes des lots d'extrudés de support pour catalyseurs ou de catalyseurs parfaitement calibrés.

Le système selon l'invention permet notamment d'exclure les particules trop fines d'un catalyseur et donc d'éliminer ces "fines" dans des lits que les raffineurs disposent dans les réacteurs d'hydrotraitement ce qui permet, après triage, de restituer un lot d'extrudés parfaitement calibrés et donc réutilisables avec une efficacité égale à celle des matériaux neufs. Les extrudés généralement utilisés ici sont par exemple à base d'alumine ou de silice ou de silice alumine.

Le procédé, selon l'invention, est particulièrement intéressant dans le cadre du réemploi d'un catalyseur qui a déjà été utilisé dans des réactions de raffinage (hydrotraitement notamment). Un tel catalyseur ne peut pas être utilisé tel quel notamment parce qu'il est usé et a perdu ses qualités catalytiques. Il devra donc, avant d'être réutilisé, être soumis à une opération de régénération.

Mais en outre, au cours des opérations de raffinages précédentes, il a été soumis à des contraintes mécaniques importantes. Il s'ensuit que le catalyseur au lieu de se présenter sous la forme d'extrudés de même taille et poids (comme c'est le cas lorsque le catalyseur est neuf) se présente après emploi prolongé sous la forme d'extrudés de tailles et/ou de poids et/ou de densité apparente différents (la densité apparente traduit le fait que si l'on tasse dans des flacons différents une même masse de plusieurs types d'extrudés, on obtiendra des volumes différents de chacun des types d'extrudés). En particulier, le catalyseur peut renfermer, en poids, jusqu'à 50 % d'extrudés de taille fine par rapport à la taille normale des extrudés utilisés en raffinage. Or ces particules très fines (les raffineurs les appellent "fines") de longueur généralement inférieure, par exemple, à environ 1,5 mm (0.0015 mètres) ou environ 3 mm (0.003 mètres) selon la nature du catalyseur et de l'opération de raffinage, ne peuvent valablement être réintroduites dans un réacteur de raffinage si l'on veut éviter les pertes de charges dans ce réacteur. Il convient donc d'éliminer au moins la majeure partie des "fines" (au moins 50 % de préférence au moins 75 % et plus particulièrement au moins 90 %). De préférence, c'est après l'élimination des "fines" que l'on procédera ensuite à la régénération proprement dite du catalyseur. On peut cependant également effectuer cette opération de séparation sur un catalyseur régénéré. Diverses méthodes ont déjà été proposées pour l'élimination des fines, en particulier des méthodes de tamisage, lesquelles finalement ne sont pas efficaces tout en étant très fastidieuses. Il est par exemple impossible par tamisage d'éliminer les fines de longueur inférieure à 1,5 mm dans un lot d'extrudés de 1,5 mm de diamètre. Le diamètre des extrudés étant égal au côté de la maille, même les catalyseurs de longueur supérieure à 1,5 mm peuvent passer à travers la maille dans le sens de la longueur. Le procédé de l'invention permet de façon simple et efficace l'élimination de la majeure partie des extrudés de taille et/ou de poids et/ou de densité apparente non adéquat (s).

L'appareil utilisé pour mettre en oeuvre l'invention est du type élévateur vibrant hélicoïdal ; il est constitué d'au moins une spire sensiblement horizontale (axe sensiblement vertical) dont la largeur est comprise de préférence entre environ 50 et 400 mm (0,05 et 0,4 m) et plus particulièrement entre 200 et 300 mm( 0,2 et 0,3 m) avec un pas (distance entre les sommets de deux spires) généralement de 50 à 150 mm (0.05 et 0.15 m), et de préférence de l'ordre de 80 à 120 mm (0,08 et 0,12 m), par exemple environ 100 mm (0,1 m). La pente est de 2 à 20 degrés environ et de préférence de 9 à 16 degrés. Cette technologie est inspirie de FR-A 2 320 620 décrivant un elevateur vitrant hélicoidal. Dans EP-A 223 639 de la demanderesse (document tombant sous l'article 54(3) CBE), on utilise également un elevateur vitrant hélicoîdal mais avec demirement à contre-con sont des particules à séparer.

Dans la présente invention la spire ou chaque spire, s'il y en a plusieurs, comporte 2 à 9 pas ou davantage par exemple jusqu'à 150 pas à titre d'exemple et est enroulée autour d'un fût creux à la base ou au sommet duquel, par exemple, sont disposés des sytèmes permettant à l'ensemble fût-spire de prendre un mouvement vibratoire d'amplitude variable.

Les vibrations peuvent être produites par au moins un système placé à tout niveau adéquat, par exemple à la base ou au sommet du fût ou encore positionné autour de la spire. Parmi les systèmes que l'on pourra choisir, on nommera par exemple : les moteurs à balourds, les vibrants électromagnétiques (excités par un cycle variable, avec création d'impulsions) et les excitatrices à balourds. La présente invention est caractérisée en ce que l'amplitude (latérale) du mouvement de vibration ainsi communiqué à l'ensemble (déplacement latéral des parois verticales du fût) peut ainsi varier entre 0,2 et 15 mm et de préférence entre 2 et 5,5 mm. L'ensemble fût-spire, source de vibration, pourraît être disposé, à titre d'exemple, sur un poteau central servant de support, divers matériaux anti-vibratiles pouvant être interposés entre le fût et le poteau. Le matériau utilisé pour la confection de la spire, ou plus exactement des pas de la spire, peut être en acier doux sablé, ou un inox, etc, revêtue d'une peinture anti-rouille. En modifiant le revêtement du pas, c'est-à-dire, par example, en projetant une peinture plastique ou en collant une bande caoutchouc, ou toute autre matière convenable, on peut d'une part modifier le coefficient d'adhérence et, par conséquent, la ségrégation des produits pulvérulents pour une amplitude donnée, mais aussi réduire considérablement le bruit provoqué par les mouvements d'extrudés sur l'acier.

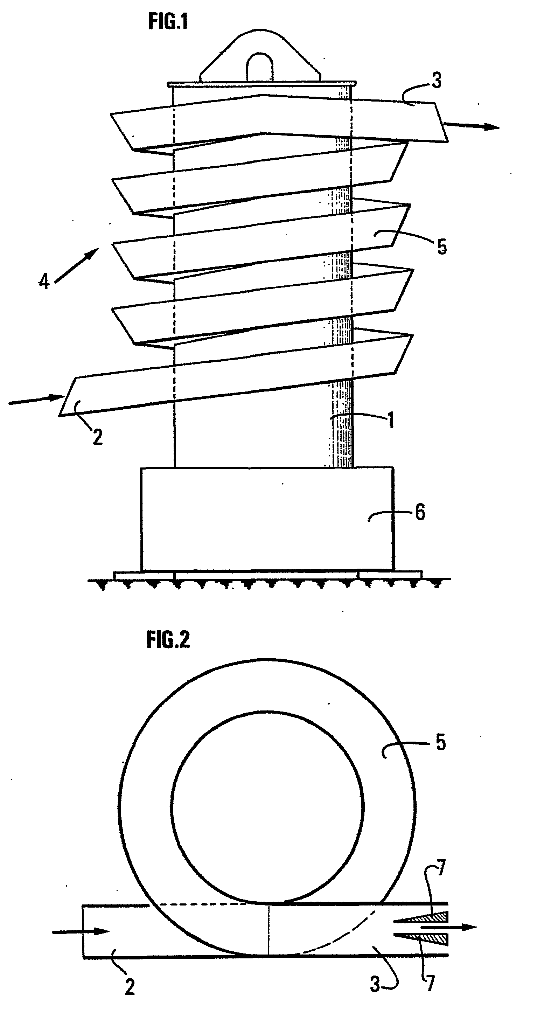

Sur la figure 1 on a représenté un fût ou poteau (1) avec une spire ou hélice (4) (élévateur vibrant hélicoïdal) à 5 pas, tels que (5).

Le moteur à balourds (6), engendre les vibrations autour de l'axe ou poteau.

Le flux du mélange d'extrudés à séparer est introduit par la conduite (2) dans la périphérie de la spire ou de l'hélice, dans le pas inférieur de la spire ou de l'hélice.

Les particules solides circuleront ainsi sur la bande de la spire ou bande de circulation du pas, cette bande de circulation étant délimitée par les bords internes et externes de chaque pas.

C'est le réglage du système de vibration, dépendant essentiellement de la taille des particules à séparer et de leur quantité, c'est-à-dire de leur vitesse d'introduction dans la spire, qui permet la séparation désirée. On aperçoit au voisinage du pas d'introduction des solides, une circulation assez confuse des mélanges d'extrudés mais de façon inattendue ensuite, les extrudés les plus petits et/ou des brisures se mettent peu à peu à circuler de bas en haut, en majeure partie entre le long des bords externes de la bande de circulation de chaque pas et la partie médiane de la surface de circulation délimitée par la surface du pas. Quant aux extrudés les plus longs, ils montent le long de la spire en majeure partie entre les bords internes de la bande de circulation de chaque pas et ladite partie médiane du pas. De ce fait, progressivement et sans se gêner, les extrudés de taille normale et les fines montent et se séparent. Ils sont ainsi récupérés séparément en haut par la conduite (3). S'il y a plusieurs types d'extrudés, ceux-ci sont récupérés en fonction de leur longueur depuis les plus courts (à la périphérie externe du pas supérier) aux plus longs à la périphérique interne du pas supérieur.

Le système de vibration est soumis à un réglage approprié fonction de la nature et des dimensions des particules à séparer.

La figure 2 représente l'appareil de la figure 1, vue par dessus. On y distingue en particulier l'aménagement de chicanes (7) sur l'extrémité du pas supérieur en vue de recueillir séparément divers types d'extrudés (3 types d'extrudés sur la figure 2).

## EXEMPLE

On a procédé à des essais de séparation de mélanges de particules solides d'un catalyseur au cobalt et molybdène déposés sur un support d'alumine.

Le mélange est envoyé par la conduite (2) de la figure 1. On a utilisé une spire de 4,5 pas, la largeur du pas étant 10 cm.

On a réglé à 2 mm l'amplitude des vibrations.

Dans un premier test, on a utilisé un mélange de 3 types d'extrudés du même catalyseur chacun de ces 3 types d'extrudés représentant le tiers en volume du volume total de catalyseur : diamètre de tous les extrudés : 1,5 mm (0,0015 mètres).

Premier type d'extrudés : longueur moyenne : 3,7 mm (0,0037 mètres),

Deuxième type d'extrudés : longueur moyenne : 2,8 mm (0,0028 mètres),

Troisième type d'extrudés : longueur moyenne : 1,7 mm (0,0017 mètres).

On a récupéré en haut de l'élévateur :
- sur la partie externe du pas supérieur : environ 70 % du troisième type d'extrudés,
- sur la partie interne du pas supérieur : environ 85 % du premier type d'extrudés,
- sur la partie médiane du pas supérieur, un mélange à environ 50 % en extrudés du deuxième type, le reste étant un mélange des deux autres types d'extrudés.

Dans un second test, on observe des résultats sensiblement équivalents en utilisant un autre mélange de 3 autres types d'extrudés du même catalyseur, chacun de ces 3 types d'extrudés représentant le tiers en volume du volume total du catalyseur.

Diamètre de tous les extrudés : 3 mm (0.003 mètres).

Premier type d'extrudés : longueur moyenne : 4,5 mm (0,0045 mètres),

Deuxième type d'extrudés : longueur moyenne : 3,5 mm (0,0035 mètres),

Troisième type d'extrudés : longueur moyenne : 2,5 mm (0,0025 mètres).

Dans un troisième test, on a utilisé un mélange 50-50 (en volume) de deux types d'extrudés de diamètre 3 mm.

Premier type d'extrudés : longueur moyenne 4,5 mm (0,0045 mètres),

Deuxième type d'extrudés : longueur moyenne 2,5 mm (0,0025 mètres).

Ici, on a récupéré sur la partie extérieure du pas supérieur 95 % des extrudés du deuxième type d'extrudés et sur la partie interne du même pas 95 % des extrudés du premier type d'extrudés.

Un quatrième essai a été fait avec des catalyseurs de diamètres différents (50 % diamètre 1,5 mm 50 % diamètre 3 mm) et de longueur moyenne sensiblement voisine 2,5 à 3 mm. On a ainsi séparé sur la partie interne des catalyseurs de diamètre 3 mm contenant 5 % de diamètre 1,5 mm et sur la partie externe les catalyseurs diamètre de 1,5 mm contenant 5 % de diamètre 3 mm.

## Revendications

1. Procédé pour séparer entre eux des extrudés solides de tailles ou de diamètre ou de poids ou de densité apparente différent(s), procédé dans lequel le flux du mélange à séparer est envoyé sur le pas d'au moins une spire (4), la spire comportant au moins 2 pas, la pente d'un pas (5) étant comprise entre 2 et 20 degrés, la spire étant soumise à un mouvement vibratoire s'exerçant sur l'axe de la spire, les vibrations provoquant ainsi le cheminement de bas en haut, de tous les extrudés, les extrudés les plus petits s'élevant en cheminant le long des pas, en majeure partie entre le long des bords externes de la bande de chaque pas et la partie médiane de la surface de circulation délimitée par la surface de la spire, vers l'extrémité supérieure de la spire d'où elles sont soutirées, les extrudés les plus gros s'élevant en majeure partie entre les bords internes de la bande de chaque pas et ladite partie médiane du pas, vers l'extrémité supérieure de la spire d'où elles sont soutirées, procédé caractérisé en ce que l'amplitude latérale du mouvement vibratoire varie de 0,2 à 15 mm.

2. Procédé selon la revendication 1 dans lequel la largeur de la spire est comprise entre 50 et 400 mm (0,05 et 0,4 m), la largeur d'un pas étant comprise entre 50 et 150 mm (0,05 et 0,15 m).

3. Procédé selon l'une des revendications 1 et 2 appliqué à la séparation des "fines" d'un catalyseur de raffinage.

4. Procédé selon la revendication 3 appliqué à la séparation des "fines" d'un catalyseur à base d'alumine.

**Patentansprüche**

1. Verfahren zur Abtrennung von extrudierten Feststoffen von unterschiedlicher Größe oder Durchmesser oder Gewicht oder offensichtlicher Dichte voneinander, in welchem der Fluß des zu trennenden Gemisches auf das Gewinde wenigstens einer Schnecke geschickt wird, wobei die Schnecke wenigstens zwei Gewinde umfaßt, wobei die Neigung eines Gewindes (5) zwischen 2 und 20 liegt, wobei das Gewinde einer Vibrationsbewegung, die sich auf der Achse des Gewindes ausübt, unterworfen wird, wobei die Vibrationen somit die Bewegung von unten nach oben aller Extrudate bewirken, wobei die kleinsten Extrudate sich erheben bei Bewegung entlang der Länge des Gewindes, zum größeren Teil zwischen der Länge der äußeren Kanten der Bande jedes Gewindes und des mittleren Teiles der Zirkulationsoberfläche, begrenzt durch die Oberfläche der Schnecke, zum oberen Ende der Schnecke, wo sie abgezogen werden, wobei die größten Extrudate sich zum größeren Teil erheben zwischen den inneren Kanten der Bande jedes Gewindes und genanntem Mittelteil des Gewindes, zum oberen Ende der Schnecke, wo sie abgezogen werden, wobei das Verfahren dadurch gekennzeichnet ist, daß die seitliche Amplitude der vibratorischen Bewegung von 0,2 bis 15 mm variiert.

2. Verfahren gemäß Anspruch 1, in welchem die Größe der Schnecke zwischen 50 und 400 mm (0,05 und 0,4 m) liegt, die Größe eines Gewindes zwischen 50 und 150 mm (0,05 und 0,15 m).

3. Verfahren gemäß eines der Ansprüche 1 und 2, angewandt auf die Trennung von "fines" (staubähnlichem Abrieb) eines Raffinierungskatalysators.

4. Verfahren gemäß Anspruch 3, angewandt auf die Trennung von "fines" eines Katalysators auf Aluminiumoxidbasis.

**Claims**

1. Process for separating from one another solid extrudates of different sizes or diameters or weights or apparent densities, said process comprising conducting the flow of the mixture to be separated on to the thread of at least one spiral (4), said spiral comprising at least two threads, the slope of a thread (5) being comprised between 2 and 20 degrees, said spiral being subjected to a vibratory motion exerted on the axis of the spiral, the vibrations thus causing the progress from the bottom to top, of all the extrudates, the smallest extrudates ascending by advancing along threads, for the most part between the length of the outer edges of the strip of each thread and the middle part of the flow surface bounded by the surface of the spiral, to the upper end of the spiral whence they are withdrawn, the largest extrudates ascending for the most part between the inner edges of the strip of each thread and said middle part of the thread, to the upper end of the spiral whence they are withdrawn, process characterized in that the lateral amplitude of the vibratory motion varies between 0.2 and 15 mm.

2. Process according to claim 1, wherein the width of the spiral is comprised between 50 and 400 mm (0.05 and 0.4 m), the width of a thread being comprised between 50 and 150 mm (0.05 and 0.15 m).

3. Process according to one of claims 1 and 2 applied to the separation of the "fines" from arefining catalyst.

4. Process according to claim 3 applied to the separation of "fines" from a catalyst based on alumina.

**FIG.1**

**FIG.2**